# EUROPÄISCHE PATENTSCHRIFT

(11) **EP 0 395 987 B1**
(45) Veröffentlichungstag und Bekanntmachung des Hinweises auf die Patenterteilung: **30.03.1994**
(21) Anmeldenummer: 90107710.7
(22) Anmeldetag: 24.04.1990
(51) Int. Cl.: C09D 4/06, C09J 4/06, C08F 2/50

(54) **Durch ultraviolette Strahlung härtbare Mittel**
Curable composition by ultraviolet radiation
Composition durcissable par rayonnement ultraviolet

(30) Priorität: 29.04.1989 DE 3914375
(43) Veröffentlichungstag der Anmeldung: 07.11.1990
(73) Patentinhaber: BASF Aktiengesellschaft, 67063 Ludwigshafen (DE)
(72) Erfinder: Rehmer, Gerd, Dr., D-6711 Beindersheim (DE); Boettcher, Andreas, Dr., D-6907 Nussloch (DE)

(56) Entgegenhaltungen:
- EP-A- 0 017 364
- EP-A- 0 243 605

## Beschreibung

Die vorliegende Erfindung betrifft durch ultraviolette Strahlung härtbare Mittel, basierend auf einer Bindemittelzubereitung aus
(1) 99,0 bis 20 Gew.% eines Copolymerisats,
(2) 1,0 bis 80 Gew.% monoolefinisch ungesättigten Verbindungen und
(3) 0,0 bis 20 Gew.% mehrfach olefinisch ungesättigten Verbindungen.

Ziele der Erfindung sind insbesondere UV-vernetzbare Mittel die sich auszeichnen durch hohe Reaktivität gegenüber UV-Strahlen, Einsatz niedermolekularer Copolymerisate, Verzicht auf polymeranaloge Umsetzungen (kein Acrylierungsschritt), verringerte flüchtige Anteile, sowie verringerte Freisetzung von migrationsfähigen Photolyseprodukten.

Des weiteren werden angestrebt solche Mittel, die im Falle ihrer Verwendung als Haftkleber eine geringe Viskosität besitzen, nach der Bestrahlung mit UV-Strahlen eine hohe Scherstandfestigkeit sowohl bei Raumtemperatur als auch bei höherer Temperatur haben und eine hohe Ðchälfestigkeit sowie hohe Anfaßklebrigkeit aufweisen.

Aus der DE-OS 36 13 082 ist bekannt die Herstellung von strahlenhärtbaren (UV- und Elektronenstrahlen) (meth)acrylierten Polyestern und deren Verwendung zur Herstellung von Haftklebstoffen. Von Nachteil sind hierbei: Die UV-vernetzten Haftklebeschichten weisen nur eine geringe Klebrigkeit auf. Die unter Luftsauerstoffatmosphäre vernetzten Produkte genügen nicht den Anforderungen die an einen Haftklebstoff gestellt werden. Die Herstellung ist besonders aufwendig, insbesondere kann nicht auf die Umsetzung mit olefinisch ungesättigten Verbindungen verzichtet werden.

Aus der DE-PS 33 23 913 ist ferner bekannt die Herstellung und Verwendung von Polyisobutylenbernsteinsäurehalbestern und ihre Verwendung zur Herstellung eines Klebemittels. Diese Produkte genügen jedoch nicht den hohen Anforderungen, die an einen Haftklebstoff gestellt werden. Insbesondere müssen auch diese Produkte in einer polymeranalogen Reaktion mit doppelbindungshaltigen Verbindungen umgesetzt werden.

Die DE-PS 26 21 096 beschreibt halogenhaltige photopolymerisierbare Klebstoffe auf der Basis von Polykondensaten und -addukten. Diese Produkte enthalten ungesättigte organische Verbindungen, die mindestens zwei Reste von Acrylsäure oder Methacrylsäure aufweisen. Nachteil hierbei ist: Diese Klebstoffe werden vorwiegend zum Laminieren eingesetzt; auch hier kann auf olefinisch ungesättigte Verbindungen nicht verzichtet werden. Insbesondere kann nicht auf halogenierte (chlorhaltige) Einsatzstoffe verzichtet werden.

Aus der NL-Patentanmeldung 6 606 711 sind auch schon Haftklebebänder bekannt, die durch Überziehen eines flächigen Substrates mit einem Polyacrylatkleber hergestellt sind, wobei mindestens ein monomerer Acrylsäureester, z.B. 2-Ethylhexylacrylat, mitverwendet und durch UV-Bestrahlung und anschließendes Erhitzen polymerisiert wird. Um dabei jedoch brauchbare Ergebnisse zu erzielen, muß unter Inertgasatmosphäre belichtet werden. Außerdem ist die Mitverwendung der gegebenenfalls haut- und augenreizenden leichtflüchtigen Acrylester von Nachteil.

Aus der NL-Patent 7 009 629 ist zudem ein Verfahren zur Herstellung von Klebstoffen bekannt, bei dem Gemische aus Acryl- und Methacrylsäureestern, wie 2-Ethylhexylacrylat, mit organischen Polymeren, wie Cellulosederivaten, Polyolefinen oder Polyestern als Viskositätsregulatoren und ggf. zusammen mit einem Tackifier, wie Polyvinylmethylether, in dünner Schicht auf ein flächiges Substrat aufgebracht und mit energiereicher Strahlung behandelt werden. Auch hierbei ist die Mitverwendung der monomeren (Meth)acrylestern, die reizend wirken und leicht flüchtig sind, von Nachteil, und man erhält zudem nur Produkte, deren Kohäsion für viele Anwendungen auf dem Haftklebergebiet nicht ausreicht.

Bei dem Verfahren der DE-OS 23 57 586 zur Herstellung selbsthaftender Überzüge wird mit ionisierenden Strahlen bestrahlt, und zwar ein bei Raumtemperatur flüssiges Gemisch aus (A) einem monoolefinisch ungesättigten Monomeren, das bei Raumtemperatur klebrige Polymerisate bildet, (B) einer mindestens zweifach olefinisch ungesättigten Verbindung, (C) einem Polymeren eines Erreichungspunktes unter 50°C und eines durchschnittlichen Molekulargewichtes zwischen 500 und 10.000 und (D) einem üblichen Photoinitiator, z.B. Benzoin, Acetophenon oder Benzophenon, das gleichfalls auf ein flächiges Substrat aufgebracht ist. Auch bei diesem Verfahren können als Monomere (A) Acryl- und Methacrylsäureester von 4 bis 12 C-Atome enthaltenden Alkanolen eingesetzt werden. Die nach diesem Verfahren hergestellten Klebeschichten weisen zwar hohe Scherfestigkeit bei Raumtemperatur und gute Oberflächenklebrigkeit auf, zeigen aber verhältnismäßig starken kalten Fluß und bei erhöhten Temperaturen ungenügende Scherfestigkeiten.

Da bei Massen, die mit UV-Strahlen vernetzt werden sollen, Photoinitiatoren mitverwendet werden, sollen diese möglichst in den Massen gut löslich sein und aus den Massen nicht ausschwitzen, so daß die Massen auch bei erhöhter Temperatur verarbeitet werden können. Auch sollen diese Photoinitiatoren beim Bestrahlen keine zum Ausschwitzen neigende Abbauprodukte mit starkem Eigengeruch bilden.

Man hat daher auch schon einpolymerisierbare Photoinitiatoren in UV-härtbaren Massen mitverwendet. So werden in der EP-OS 0 017 364 z.B. Copolymerisate beschrieben, die u.a. als Klebstoffe und für Dichtungsmassen geeignet sind, und die 0,1 bis 10 Gew.% Allylbenzoylbenzoat als Photoinitiator einpolymerisiert enthalten. Diese Massen lassen sich zwar mit UV-Strahlen vernetzen, ergeben jedoch vernetzte Produkte mit sehr hoher Viskosität. Außerdem ist ihre Reaktivität gegenüber UV-Strahlen zu gering, und damit hergestellte haftklebrige Schichten erfüllen nicht die Anforderungen, die an einen guten Haftkleber gestellt werden.

Nach der Lehre der DE-OS 24 11 169 können mit ultraviolett-Strahlen vernetzbare Haftklebstoffe hergestellt werden, indem man Copolymerisate aus (Meth)acrylestern einsetzt, die monoolefinisch ungesättigte Ether- und Ester-Derivate von substituierten Benzophenonen als Photoinitiatoren einpolymerisiert enthalten. Die dabei einpolymerisierten Benzophenon-Derivate sind jedoch gegenüber UV-Strahlen wenig reaktiv und die aus den Copolymerisaten hergestellten druckempfindlichen Klebstoffe genügen hohen Anforderungen nicht. Außerdem zeigen danach hergestellte Schmelzklebstoffe eine zu hohe Schmelzviskosität, die ihrem praktischen Einsatz im Wege steht.

Auch aus der EP-OS 02 46 848 sind mit UV-Strahlen vernetzbare Haftklebstoffe auf Basis von Polyacrylaten bekannt, die als Photoinitiatoren monoolefinisch ungesättigte Benzophenon-Derivate einpolymerisiert enthalten. Diese Haftklebstoffe sollen auf dem medizinischen Gebiet, z.B. für Pflaster, eingesetzt werden und ihre Adhäsion zur Haut soll im Laufe der Zeit nicht zunehmen. Ein Nachteil dieser Haftklebstoffe ist jedoch darin zu sehen, daß sie gegenüber UV-Strahlen nur eine geringe Reaktivität und vergleichsweise hohe Schmelzviskosität besitzen.

Aus der EP-A-243 605 sind strahlungshärtbare Gemische bekannt, die ein Polymer und einen gesondert zugesetzten Photoinitiator enthalten.

Es wurde nun gefunden, daß man durch ultraviolette Strahlung härtbare Mittel der eingangs definierten Art und mit den eingangs erläuterten Vorzügen dann erhält, wenn die Mittel als Copolymerisate (1) solche enthalten, die erhältlich sind, indem man eine Mischung aus
(A) 80 bis 99,9 Gew.% olefinisch ungesättigten Monomeren, enthaltend 80 bis 99,9 Gew.%, bezogen auf das Copolymerisat, Hauptmonomere ausgewählt aus (Meth)acrylsäureestern von Alkanolen mit 1 bis 24 C-Atomen, Vinylestern 1 bis 20 C-Atome enthaltender, gesättigter Carbonsäuren, Vinylethern mit 3 bis 22 C-Atomen, Vinylaromaten mit 8 bis 12 C-Atomen, Monoolefinen mit 2 bis 20 C-Atomen, Diolefinen, Vinylhalogeniden und/oder Allylether bzw. Allylester,
(B) 0 bis 10 Gew.% eines copolymerisierbaren olefinisch ungesättigten Photoinitiators, sowie
(C) 0,1 bis 10 Gew.% eines die Polymerisation regelnden Photoinitiators
radikalisch polymerisiert, wobei die Summe aus (B) und (C) mindestens 0,1 Gew.% beträgt und die angegebenen Gewichtsprozente sich auf die Summe der Gewichte aus (A) + (B) + (C) beziehen.

Gegenstand der vorliegenden Erfindung sind dementsprechend durch ultraviolette Strahlung härtbare Mittel, basierend auf einer Bindemittelzubereitung aus
(1) 99,0 bis 20 Gew.% eines Copolymerisats,
(2) 1,0 bis 80 Gew.% monoolefinisch ungesättigten Verbindungen und
(3) 0,0 bis 20 Gew.% mehrfach olefinisch ungesättigten Verbindungen.

Die erfindungsgemäßen Mittel sind dadurch gekennzeichnet, daß sie als Copolymerisate (1) solche enthalten, die erhältlich sind, indem man eine Mischung aus
(A) 80 bis 99,9 Gew.% olefinisch ungesättigten Monomeren, enthaltend 80 bis 99,9 Gew.%, bezogen auf das Copolymerisat, Hauptmonomere ausgewählt aus (Meth)acrylsäureestern von Alkanolen mit 1 bis 24 C-Atomen, Vinylestern 1 bis 20 C-Atome enthaltender, gesättigter Carbonsäuren, Vinylethern mit 3 bis 22 C-Atomen, Vinylaromaten mit 8 bis 12 C-Atomen, Monoolefinen mit 2 bis 20 C-Atomen, Diolefinen, Vinylhalogen und/oder Allylether bzw. Allylester,
(B) 0 bis 10 Gew.% eiens copolymerisierbaren olefinisch ungesättigten Photoinitiators, sowie
(C) 0,1 bis 10 Gew.% eines die Polymerisation regelnden Photoinitiators
radikalisch polymerisiert, wobei die Summe aus (B) und (C) mindestens 0,1 Gew.% beträgt und die angegebenen Gewichtsprozente sich auf die Summe der Gewichte aus (A) + (B) + (C) beziehen.

Besonders bevorzugte erfindungsgemäße Mittel sind dadurch gekennzeichnet, daß sie als Copolymerisate (1) solche enthalten, die erhältlich sind, indem man eine Mischung aus
(A) 90 bis 99,9 Gew.% olefinisch ungesättigten Monomeren, enthaltend 90 bis 99,5 Gew.%, bezogen auf das Copolymerisat, Hauptmonomere ausgewählt aus (Meth)acrylsäureestern von Alkanolen mit 1 bis 24 C-Atomen, Vinylestern 1 bis 20 C-Atome enthaltender, gesättigter Carbonsäuren, Vinylethern mit 3 bis 22 C-Atomen, Vinylaromaten mit 8 bis 12 C-Atomen, Monoolefinen mit 2 bis 20 C-Atomen, Diolefinen, Vinylhalogeniden und/oder Allylether bzw. Allylester,
(B) 0 Gew.% eines copolymerisierbaren olefinisch ungesättigten Photoinitiators, sowie
(c) 0,1 bis 10 Gew.% eines die Polymerisation regelnden Photoinitiators
radikalisch polymerisiert, wobei die angegebenen Gewichtsprozente sich auf die Summe der Gewichte aus (A) + (B) + (C) beziehen.

Zu den erfindungsgemäß einzusetzenden Copolymerisaten (1) ist im einzelnen das folgende zu sagen:

### Komponente (A)

Die Copolymerisate enthalten als Hauptmonomere
80 - 99,9 Gew.%, bevorzugt 90 - 99,5 Gew.%, (Meth)acrylsäureester von Alkanolen mit 1 bis 24 C-Atomen, wie Methyl-, Ethyl-, n-Propyl-, i-Propyl-, n-, i- und t-Butyl-, 2-Ethylhexyl-, Amyl-, i-Amyl-, i-Octyl-, Decyl-, Lauryl-, Stearylacrylat und/oder -methacrylat, und/oder Vinylester 1 bis 20 C-Atome enthaltender gesättigter Carbonsäuren, wie Vinylformiat, Vinylacetat, -propionat, 2-ethylhexanat, -laurat und -stearat, und/oder Vinylether mit 3 bis 22 C-Atomen, wie Methyl-, Ethyl-, Butyl-, Hexyl-, Octadecylvinylether, und/oder Vinylaromaten mit 8 bis 12 C-Atomen, wie Styrol, oder ferner α-Methylstyrol, Vinyltoluole, t-Butylstyrol und Halogenstyrole, ferner gegebenenfalls auch Monoolefine mit 2 bis 20 C-Atomen, wie Ethylen, Propylen, n- und i-Butylen, Diisobuten, Triisobuten und Oligopropylene, und/oder Diolefine, wie Butadien und/oder Vinylhalogenide, wie Vinylchlorid und Vinylidenchlorid, und/oder Allylether bzw. Allylester.

Darüber hinaus enthalten die Copolymerisate gegebenenfalls bis 20 Gew.%, bevorzugt 0,25 bis 10 Gew.% α,β-monoolefinisch ungesättigte Säuren einpolymerisiert. Geeignet sind z.B. Mono- und Dicarbonsäuren mit 3 bis 6 C-Atomen, sowie die Monoester von 4 bis 6 C-Atomen enthaltenden Dicarbonsäuren mit 1 bis 24 C-Atome enthaltenden Alkanolen und/oder deren Anhydride, ferner olefinisch ungesättigte Sulfonsäuren und Phosphonsäuren, wie Vinylsulfonsäure und Vinylphosphonsäure.
Bevorzugt verwendet man (Meth)acrylsäure, Crotonsäure, Maleinsäure, Fumarsäure, Itaconsäure, Monomethyl-, -butyl, -2-ethylhexyl, -i-amyl, -i-octyl und/oder -stearylmaleinat und/oder Maleinsäureanhydrid, Itaconsäureanhydrid und (Meth)acrylsäureanhydrid.

Eine weitere Gruppe Copolymerisate enthält in Mengen bis 20 Gew.%, bevorzugt 0,5 bis 10 Gew.%, Tetrahydrofurfuryl-2-(meth)-acrylat, Tetrahydrofurfuryl-2-(meth)acrylamid und/oder alkoxygruppen-enthaltende Monomere wie 3-Methoxybutyl(meth)acrylat, 2-Methoxyethyl(meth)acrylat, 2-Butoxyethyl(meth)acrylat, 2-Ethoxyethyl(meth)acrylat, vorzugsweise Tetrahydrofurfuryl-2-(meth)acrylat einpolymerisiert.

Eine weitere Gruppe Copolymerisate enthält in Mengen von 0 bis 20 Gew.%, bevorzugt 0,25 bis 5 Gew.%, N-substituierte Amide einpolymerisiert, wie N-Vinylimidazol, N-Vinylpyrrolidon, N-Vinylformamid, (Meth)acrylamid, sowie Mono- und/oder Dialkyl(meth)acrylamide, wie N-Methyl(meth)acrylamid, N-Benzyl(meth)acrylamid, N-Isobornylmethacrylamid und Diacetonacrylamid.

Zur Herstellung der Copolymerisate können auch weitere funktionelle Gruppen enthaltende Monomere in Mengen von 0 bis 10 Gew.% mitverwendet werden, z.B. Hydroxyalkyl(meth)acrylate wie 2-Hydroxipropyl(meth)acrylat, 4-Hydroxibutyl(meth)acrylat und 2-Hydroxyethyl(meth)acrylat.

Des weiteren können die Copolymerisate auch basische N-Atome aufweisende Monomere in Mengen von bis 10 Gew.% einpolymerisiert enthalten, wie N,N-Diethylaminoethyl(meth)acrylat, N,N-Dimethylaminoethyl(meth)acrylat.

Eine weitere Gruppe Copolymerisate enthält, gegebenenfalls zusätzlich zu den angegebenen Monomeren, in Mengen bis 20 Gew.% Monomere einpolymerisiert, die heterocyclische und/oder homocyclische Ringe enthalten, wie 2-N-Morpholinoethyl(meth)acrylat, Menthyl(meth)acrylat, Cyclohexyl(meth)acrylat, N-Isobornyl(meth)acrylat.

Insbesondere können auch spezielle reaktive haftvermittelnde Monomere für die Herstellung der Copolymerisate in Mengen bis 10 Gew.% mitverwendet werden, wie 3-Methacryloxypropyltrimethoxysilan, Vinyltriethoxysilan und Vinyltrimethoxysilan.

Eine besonders bevorzugte Gruppe Copolymerisate (P) enthält in Mengen bis 25 Gew.%, bevorzugt von 0,5 bis 5 Gew.% Monomere einpolymerisiert, die mindestens eine zur Wasserstoffbrückenbindung befähigte spacergebundene polare Gruppe enthalten; solche Monomere können z.B. durch Umsetzung von Hydroxialkyl(meth)acrylaten mit Bernsteinsäureanhydrid erhalten werden. Geeignet ist des weiteren N-Maleinimidohexansäure. Bevorzugt wird aus dieser Monomergruppe das Umsetzungsprodukt von 1,4-Butandiolmono(meth)acrylat und/oder 1,2-Ethandiol(meth)acrylat und/oder 1,2- und/oder 1,3-Propandiol(meth)acrylat mit Bernsteinsäureanhydrid eingesetzt.

Die Copolymerisate haben meist K-Werte nach DIN 53 726 von 8 bis 100, bevorzugt 12 bis 80, besonders bevorzugt 20 bis 70, ganz besonders bevorzugt 30 bis 55.

Zur Herstellung von Copolymerisaten, die sich für Haftkleber eignen, verwendet man bevorzugt solche Monomere, deren Homopolymerisate Glasübergangstemperaturen von unter 0°C haben, bevorzugt solche deren Homopolymerisate Glasübergangstemperaturen von unter -10°C haben, speziell Copolymerisate des n-Butylacrylats, 2-Ethylhexylacrylats, i-Amylacrylats, i-Octylacrylats, die die übrigen oben genannten Monomeren im allgemeinen zu nicht mehr als 40 Gew.% einpolymerisiert enthalten.

### Komponente (B)

Zu dieser Substanzklasse gehören Photoinitiatoren, die eine copolymerisierbare Doppelbindung (i.a. (Meth)acrylsäureester) enthalten und die durch Copolymerisation in das Polymere eingebaut werden.

Derartige Verbindungen sind bekannt. So sind besonders die aus der EP-OS 0 217 205 bekannten copolymerisationsfähigen Photoinitiatoren geeignet, des weiteren auch die aus der US-PS 3,429,852 bekannten Photoinitiatoren.

### Komponente (C)

Zu dieser Substanzklasse gehören Verbindungen, die außer der durch UV-Strahlung anregbaren Atomgruppierung, Substituenten enthalten, die die Polymerisation regeln (Isopropylgruppe, benzylische Wasserstoffatome, -S-H(Mercaptogruppe), Heteroatom-CHR′R˝-gruppen); diese Verbindungen werden durch Pfropfcopolymerisation (aufgrund ihrer regelnden Eigenschaft) in das Copolymere eingebaut; die Verwendung dieser Verbindungen ist bevorzugt. Geeignete Verbindungen sind z.B. Derivate des Acetophenons, des Benzophenons, Benzaldehyds, Xanthons, Thioxanthons, der Benzildimethylketale, der Benzoinether, der 2-Hydroxy-2,2-substituierten Acetophenone, 3-ketosubstituierte Cumarine, des Benzils und der Acylphosphinoxide, die einen Isopropyl-, Isobutyl- und/oder Isopropylphenyl- und/oder Isobutylphenylrest und/oder Reste aufweisen, die ein sekundäres, bevorzugt tertiäres an einem, einem oder zwei Heteroatomen benachbarten Kohlenstoffatom gebundenes Wasserstoffatom enthalten oder eine -S-H(Mercaptogruppe) tragen.

Besonders geeignet sind z.B. 1-(4-Isopropylphenyl)-2-hydroxy-2-methylpropan-1-on, Isopropylthioxanthon, 4-Isopropylbenzophenon, 2,4,6-Trimethylbenzoylphenylphosphinsäureethylester, Isopropylbenzoinether, 2,2-Diethoxyacetophenon, Ethylbenzoinether.

Weiterhin sind die aus der EP-OS 0 209 831 bekannten Photoinitiatoren geeignet, sofern sie einen die Polymerisation regelnden Rest tragen.

Die Verbindungen (C) werden dem polymerisierenden Reaktionsgemisch in Mengen von 0,1 bis 10 Gew.%,bevorzugt 0,5 bis 7,5 Gew.%, besonders bevorzugt in Mengen von 1 bis 5 Gew.% zugesetzt, wobei sich die Angabe der Gewichtsprozente auf die Summe der Gewicht von A + B + C bezieht.

Der Einsatz der die Polymerisation regelnden Photoinitiatoren (C) hat den Vorteil, daß auf Fremdregler z.T. verzichtet werden kann, zum anderen ist die strahlensensitive Gruppe Bestandteil der Polymerkette. Daraus ergeben sich Vorteile hinsichtlich der Reaktivität und der erzielbaren mechanischen Eigenschaften bei z.B. Haftklebern. Des weiteren sind diese Verbindungen meist einfacher herzustellen und bedeutend preiswerter als die copolymerisierbaren Varianten. Von der zugesetzten Menge Photoinitiator (C) sind nachweislich mindestens 20 bis 100 Gew.% Bestandteil der Copolymerisate (P).

Des weiteren kann während der Bestrahlung mit UV-Licht der Reaktivverdünner an die Polymerkette gebunden werden.

Der Einsatz von die Polymerisation regelnder Photoinitiatoren ist besonders bevorzugt. Die Mitverwendung copolymerisationsfähiger Photoinitiatoren (B) ist daher nicht in jedem Fall erforderlich. Ein zu hoher Anteil der Verbindung (B) kann auch den Vernetzungsgrad zu stark erhöhen.

Für die Herstellung von Haftklebemitteln mit sehr guter Klebrigkeit und guter Schälfestigkeit werden daher Copolymerisate (1) ohne die Mitverwendung der Verbindungen (B) und die Mittel ohne Mitverwendung der Verbindungen (3) hergestellt.

Da es ein Ziel der Erfindung ist, den Anteil an migrationsfähigen Photolyseprodukten zu senken, werden in der Regel den Mitteln keine zusätzlichen Photoinitiatoren zugesetzt. Dennoch können den Mitteln Photoinitiatoren zugesetzt werden. Hierfür eignen sich u.a. die genannten Photoinitiatoren.

### Herstellung der Copolymerisate (1)

Die Herstellung der Copolymerisate kann durch Substanz-, Lösungs- oder Emulsionspolymerisation unter Verwendung geeigneter Polymerisationsinitiatoren erfolgen. Derartige Verfahren sind bekannt und so kann die Herstellung der Copolymerisate z. B. in Anlehnung an die Beschreibungen in der DE-OS 25 26 747, DE-OS 30 18 131 oder EP-OS 3516 erfolgen, wobei die Polymerisation in Lösung bevorzugt ist.

Für die Polymerisation in Lösung können die üblichen Lösemittel wie z.B. Kohlenwasserstoffe, wie Benzol, Toluol, o-, m-, p-Xylol, Ethylbenzol, Benzine, n-Hexan, Cyclohexan, Ester wie Ethylacetat, Alkohole wie Ethanol, Methanol, iso-Propanol, Ether wie Dioxan, Tetrahydrofuran, sowie Gemische aus den genannten Lösemitteln verwendet werden.

Die Menge des Polymerisationsinitiators beträgt im allgemeinen 0,01 bis 5 Gew.% bezogen auf die Summe der Gewichte der Monomeren (A) + (B) und de(r)/n Verbindung(en) (C).

Geeignete Polymerisationsinitiatoren sind z.B. 2,2'-Azobisisobutyronitril (Porofor N), Dimethyl-2,2'-azobisisobutyrat (V 601, Fa. Wako), 4,4'-Azo-bis-(4-cyanvaleriansäure), Perester wie tert.-Butylperpivalat, tert.-Butylperoctoat, tert.-Butylperbenzoat, Peroxide wie Dibenzoylperoxid und Dilauroylperoxid, Hydroperoxide wie Cumolhydroperoxid sowie Peroxidicarbonate wie Dicyclohexylperoxidicarbonat, Ketonperoxide wie Methylethylketonperoxid und Cyclohexanonperoxid.

Die genannten Initiatoren können für sich allein oder gemeinsam verwendet werden. Bevorzugt ist die Verwendung von Dimethyl-2,2'-azobisisobutyrat in Mengen von 0,1 bis 5,0 Gew.%, bezogen auf die Menge der Monomeren.

Für die Durchführung der Polymerisation können auch außer den genannten die Polymerisation regelnden Verbindungen (C) weitere den Polymerisationsgrad senkende Verbindungen dem Reaktionsgemisch zugesetzt werden. Hierfür werden u.a. Mercaptane, wie Mercaptoethanol, Mercaptobernsteinsäure, Mercaptoglycerin, 3-Mercaptopropyltrimethoxysilan, 3-Mercaptopropylmethyl-dimethoxysilan, Ether wie Dioxan, Tetrahydrofuran, Alkohole wie Isopropanol, Kohlenwasserstoffe, wie Isopropylbenzol, eingesetzt. Derartige Polymerisationsregler werden in Mengen von 0 bis 10 Gew.%, bezogen auf die Summe der Gewichte A + B + C, zugesetzt.

Die Copolymerisate (1) werden besonders bevorzugt ohne die Mitverwendung der oben angeführten Polymerisationsregler hergestellt; d.h. als Regler werden die Verbindungen (C) verwendet, die allein oder im Gemisch verwendet werden.

Für die Durchführung der Polymerisation in Lösung wird meist ein Teil oder das gesamte Lösemittel mit einem Teil des Monomerengemisches und einem Teil oder der gesamten Menge des Polymerisationsinitiators erwärmt. Es wird der Beginn der Polymerisation abgewartet und der Rest des Monomerengemisches und ggf. der Rest des Polymerisationsinitiators und ggf. noch Lösemittel zugefügt. Die Polymerisation erfolgt bevorzugt in hochkonzentrierter Lösung, bevorzugt bei Monomerkonzentrationen von über 50 Gew.%, besonders bevorzugt von über 65 Gew.%, ganz besonders bevorzugt von über 80 Gew.%.

Die Polymerisation kann unter Druck, z.B. bei 1 bis 100 bar oder auch unter Normaldruck erfolgen. Die Polymerisation erfolgt bei Temperaturen von 50 bis 230°C, bevorzugt zwischen 70 und 120°C.

Die Verbindung (B), die in Mengen von 0 bis 10 Gew.%, bevorzugt in Mengen von 0,01 bis 5 Gew.%, ganz besonders bevorzugt in Mengen von 0,1 bis 2,5 Gew.%, bezogen auf die Summe der Gewichte von (A) + (B) + (C), eingesetzt wird, wird in der Regel in den Monomeren (A) gelöst und so der polymerisierenden Reaktionsmischung zugefügt. Ggf. wird auch so verfahren, daß die Verbindung (B) in einem geeigneten Lösemittel gelöst, der Reaktionsmischung zugesetzt wird.

Die Verbindung (C), die in Mengen von 0,1 bis 10 Gew.%, bevorzugt in Mengen von 0,1 bis 7,5 Gew.%, ganz besonders bevorzugt in Mengen von 1,0 bis 5 Gew.%, bezogen auf die Summe der Gewichte von (A) + (B) + (C), eingesetzt wird, wird in der Regel direkt in der anzupolymerisierenden Vorlage gelöst. In einer anderen Ausführungsform der Polymerisation wird die Verbindung (C) in einem Lösemittel oder in einem Teil des Monomergemisches gelöst und der polymerisierenden Mischung in einer Zeit zugesetzt, die unter der Zulaufzeit der Monomerlösung liegt, so daß nach beendeter Zugabe der Verbindung (C) immer noch Monomere zugegeben werden müssen.

Für die Verwendung der Copolymerisate zur Herstellung der Mittel wird nach beendeter Polymerisation das Lösemittel(gemisch) bei höherer Temperatur abdestilliert. Lösemittelreste und ggf. flüchtige Anteile werden im Hochvakuum bei Temperaturen von 80 bis 150°C entfernt. Die Entfernung der Lösemittel und der flüchtigen Anteile kann direkt aus dem Polymerisationskessel heraus erfolgen, ggf. kann die Copolymerisatlösung, ggf. nach einer Aufkonzentrierung, einem Entgasungsgerät zugeführt und dort entgast werden.

Die für Haftkleber einzusetzenden Copolymerisate (1) haben meist K-Werte von 25 bis 50. Es ist ein überraschender Vorteil der vorliegenden Erfindung, daß Copolymerisate mit niedrigen K-Werten Haftkleber ergeben, die eine sehr gute Klebrigkeit und eine exellente Scherstandfestigkeit aufweisen. Niedrige K-Werte sind von besonderem Vorteil, weil sich die Copolymerisate leichter von flüchtigen Anteilen befreien lassen, die Mittel mit einem höheren Polymergehalt dennoch eine geringe Viskosität haben.

Der K-Wert des Copolymerisats richtet sich nach den gewünschten Eigenschaften insbesondere auch nach der gewünschten Viskosität der Mittel.

Die Auswahl und Kombination der Monomeren (A) richtet sich nach dem Verwendungszweck der UV-vernetzbaren Copolymerisate.

Durch die Auswahl und Abstimmung der Komponenten (B) und (C), ist es möglich, Copolymerisate mit niedrigen K-Werten herzustellen, die sich dennoch im Gemisch mit geeigneten Reaktivverdünnern mit UV-Strahlen schnell härten lassen. Durch die eingesetzte Menge an (B) und (C) läßt sich sehr einfach der erzielbare Vernetzungsgrad einstellen.

Man kann jedoch auch in speziellen Anwendungsfällen auf die Verbindung (B) verzichten, und die Photoreaktivität durch eine Kombination geeigneter Photoinitiatoren (C) einstellen, d.h. optimal an eine vorhandene Strahlungsquelle anpassen.

Insbesondere richtet sich die Auswahl der Komponenten (B) und (C) nach deren UV-Absorptionsspektren und ihren Extinktionskoeffizienten; so ist weiterhin eine einfache optimale Anpassung an gegebene UV-Strahler möglich.

Zu den für den erfindungsgemäßen Zweck einzusetzenden monoolefinisch ungesättigten Verbindungen (2), d.h. den Reaktivverdünnern ist im einzelnen zu bemerken:
Als Reaktivverdünner eignen sich alle oben angeführten bei Raumtemperatur flüssigen Monomere. Bei Raumtemperatur feste Monomere, die in den flüssigen Monomeren gelöst werden können, sollen in diesem Sinne auch als Reaktivverdünner gelten.

Bevorzugt ist jedoch die Verwendung von Reaktivverdünnern mit einem Siedepunkt von > 100°C, besonders bevorzugt von > 125°C. Besonders bevorzugt sind die aus der EP-PS 0 088 300 bekannten Reaktivverdünner, die für sich allein oder in jedem Verhältnis gemischt eingesetzt werden können.

Wenn die Copolymerisate (1) auch zu nur 20 Gew.% in den Reaktivverdünnern gelöst sein können, so wird doch ein möglichst hoher Polymerisationanteil angestrebt. Bevorzugt sind Copolymerisatgehalte von über 45, besonders bevorzugt von über 55, ganz besonders bevorzugt von über 65 Gew.%, wobei sich die Angabe der Gewichtsprozente auf die Summe der Gewichte der Komponenten (1), (2) und (3) bezieht.

Zu den im Rahmen der Erfindung einsetzbaren mehrfach olefinisch ungesättigten Verbindungen (3) ist festzustellen:
Als solche Verbindungen eignen sich u.a. Di-, Tri-, Tetra- und höher (meth)acrylierte Verbindungen, wie z.B. 1,4-Butandioldi(meth)acrylat, Tripropylenglykoltri(meth)acrylat, Polytetrahydrofuran-250-di(meth)acrylat, Polytetrahydrofuran-2000-di(meth)acrylat, wobei die ganze Zahl das Zahlenmittel des Molekulargewichts angibt. Die Verbindungen (3) werden den Mitteln in Mengen von 0 bis 20 Gew.%, bevorzugt 0,01 bis 5 Gew.% zugesetzt. Bevorzugt sind Di-(meth)acrylate mit einem Molekulargewicht (Zahlenmittel) von über 250 g/mol, die den Mitteln in Mengen von 0,0 bis 5 Gew.% zugesetzt werden, wobei sich die Angabe der Gewichtsprozente auf die Summe der Gewichte aus den Komponenten (1), (2) und (3) bezieht.

Zu den erfindungsgemäßen Mitteln als solchen ist zu sagen:
Die Mittel können in an sich üblicher Weise modifiziert und/oder konfektioniert werden.

Für den Einsatz der Mittel für Haftkleber können z.B. die üblichen klebrigmachenden Harze, wie Kohlenwasserstoffharze, gegebenenfalls modifizierte Kolophoniumharze, Terpenphenolharze, Ketonharze, Aldehydharze, Homopolymerisate, wie Poly-2-ethylhexyl(meth)acrylat, Poly-isoamyl(meth)acrylat, Poly-isobutylacrylat, Poly-n-butylacrylat und auch entsprechenden Copolymerisate, Cumaron-Inden-Harze, Weichmacher auf Basis von Mono-, Di- oder Polyesterverbindungen, polychlorierten Kohlenwasserstoffen, oder Paraffinölen, Natur- und Synthesekautschuk, Polyvinylether oder andere Modifizierungsmittel zugegeben werden.

Geeignete klebrigmachende Harze sind z.B. Polyvinylether, wie Polyvinylisobutylether und Poly-n-butylacrylat. Die klebrigmachenden Harze können den erfindungsgemäßen Mitteln in Mengen von 0 bis 50 Gew.% zugesetzt werden. Die neuen Mittel sind als durch UV-Strahlung vernetzbare Dicht-, Siegel-, Kaschier-, Beschichtungs-, Imprägnierungs-, Überzugs- und Klebemittel verwendbar.

Die neuen Mittel eignen sich zur Herstellung von Überzügen, Beschichtungen und Imprägnierungen, insbesondere zur Herstellung von Haftklebefolien, -etiketten, einseitigen und doppelseitigen Haftklebebändern, Elektroisolierbändern, sowie Prägezangenfolien.

Dabei können die Mittel mittels üblicher Auftragsaggregate ggf. bei höherer Temperatur im allgemeinen im Bereich von 20 bis 150°C, bevorzugt bei 50 bis 100°C, besonders bevorzugt bei 50 bis 80°C in an sich üblicher Weise durch Streichen, Spritzen, Walzen, Rakeln oder Gießen auf flächige Substrate aufgebracht werden, beispielsweise auf Papier, Pappe, Zellstoff, Holz, Metalle oder Folien, z.B. aus weichgemachtem PVC, Polyethylen, Polyamiden, Polyethylenglykolterephthalat oder Aluminium und insbesondere auch Polypropylen.

Die beschichteten Substrate werden anschließend durch Bestrahlen mit ultraviolettem Licht vernetzt, wobei man im Falle der Haftkleber gut klebende Überzüge erhält, die eine hohe Kohäsion und eine sehr gute Schälfestigkeit bei vorzüglicher Alterungsbeständigkeit aufweisen. Die vernetzten wasserfesten Überzüge zeigen bei Wasserlagerung kein Weißanlaufen.

Die Bestrahlung der beschichteten Substrate kann in an sich üblicher Weise mit dem Licht von UV-Strahlern, z.B. Quecksilbernieder-, Quecksilbermitteldruck und Quecksilberhochdruckstrahlern unterschiedlicher Leistung z.B. von 80 W/cm, 100 W/cm oder 120 W/cm erfolgen; die Auswahl der Strahlers richtet sich u.a. nach den Absorptionsspektrum der Copolymerisate, bzw. der eingesetzten Verbindungen (B) und (C).

Lampen mit einer höheren Leistung ermöglichen im allgemeinen eine schnellere Vernetzung. Je nach der Geschwindigkeit mit der das beschichtete Substrat die UV-Anlage durchläuft, arbeiten ein, zwei oder mehrere Lampen in einer Anlage.

Prüfung der anwendungstechnischen Eigenschaften (siehe dazu die nachfolgenden Tabellen 1 und 2)

Die Klebeeigenschaften von flächigen Substraten, die eine Haftklebeschicht aufweisen, kann durch Messen der Scherfestigkeit als Maß für die Kohäsion und der Schälfestigkeit als zusammenfassendes Maß für Kohäsion und Oberflächenklebrigkeit erfaßt werden.

Für die Prüfung werden Folien aus Polyethylenglykolterephthalat mit den erfindungsgemäßen Mitteln derart beschichtet, das sich ein Flächenauftrag von 25 g/qm ergibt.

Die beschichteten Folien werden auf ein laufendes Endlosband gelegt und mit Geschwindigkeiten von 10 m/min bis 20 m/min unter zwei hintereinander angeordneten UV-Strahlern (Hg-Mitteldrucklampen) mit einer Leistung von jeweils 80 W/cm hindurch gefahren. Die Bestrahlung erfolgte unter Stickstoffatmosphäre.

Die so hergestellten Folien werden in 2 cm breite Streifen geschnitten und diese Streifen auf eine verchromte Messingplatte aufgebracht. Die Platte wird dann mit den Streifen 24 Stunden bei 23°C und 65 % rel. Luftfeuchtigkeit gelagert.

Zur Messung der Schälfestigkeit werden die Prüfstreifen parallel zur Klebeschicht mit einer Geschwindigkeit von 300 mm/min rückwärt abgezogen. Die hierfür erforderliche Kraft wird gemessen.

Bei der Messung der Scherfestigkeit wird eine verklebte Fläche von 20 x 45 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23°C und 50°C durchgeführt. Alle Messungen werden 5-fach gemacht.

Die in den folgenden Beispielen angegebenen Teile und Prozente beziehen sich auf das Gewicht. Die Bestimmung der K-Werte erfolgte nach DIN 53 726 in 1 %iger Lösung in Tetrahydrofuran bei 25°C.

Als monoolefinisch ungesättigte Verbindung (2) dient in allen nachfolgenden Beispielen ein Versaticsäuremonoestergemisch von 50 Teilen 2,3-Dihydroxypropyl-1-acrylat und 50 Teilen 1,3-Dihydroxypropyl-2-acrylat, gemäß EP-PS 0 088 300 ("Reaktivverdünner").

Die Viskositäten wurden aus den mit einem Platte-Kegel-System aufgenommenen Fließkurven berechnet.

Die folgenden, in den Beispielen aufgeführten Copolymerisate wurden in einer üblichen Polymerisationsapparatur, die mit einem Rührer, verschiedenen Zulaufgefäßen, einem Rückflußkühler, einem Inertgasanschluß, einer Heizung/Kühlung, verschiedenen Kontrollthermometern und für das Arbeiten unter Druck und Vakuum ausgerüstet ist hergestellt.

### Beispiel 1

Zu einer unter leichtem Rückfluß kochenden Mischung aus 250 g Ethylacetat, 5 g 2,2′-Azobisisobutyronitril und 300 g einer Monomermischung aus 610 g 2-Ethylhexylacrylat, 375 g Vinylacetat und 15 g Acrylsäure gibt man im Ablauf von 3 Stunden den Rest der Monomermischung. Man rührt noch 2 Stunden nach und gibt anschließend eine Lösung von 2 g tert.-Butyl-per-2-ethylhexanoat in 178 g Ethylacetat hinzu. Nach beendeter Zugabe rührt noch 2 Stunden nach.

Man erhält ein Copolymerisat (1) mit einem K-Wert von 65.

45 Teile des Copolymerisats (1) werden gemischt mit 65 Teilen des Reaktivverdünners (2) sowie 2 Teilen 2,4,6-Trimethylbenzoyldiphenylphosphinoxid.

### Beispiel 2

Man verfährt wie unter Beispiel 1 angegeben, gibt jedoch zu der Vorlage 40 g 1-(4-Isopropylphenyl)-2-hydroxy-2-methylpropan-1-on.

Man erhält ein Copolymerisat (1) mit dem K-Wert 45.

60 Teile des Copolymerisats (1) werden gemischt mit 40 Teilen des Reaktivverdünners (2).

### Beispiel 3

Man verfährt wie unter Beispiel 1 angegeben, gibt jedoch zu der Vorlage 20 g 1-(4-Isopropylphenyl)-2-hydroxy-2-methylpropan-1-on.

Man erhält ein Copolymerisat (1) mit dem K-Wert 51.

55 Teile des Copolymerisats (1) werden gemischt mit 45 Teilen des Reaktivverdünners (2).

### Beispiel 4

Man verfährt wie in Beispiel 1 angegeben, gibt jedoch in die Vorlage 20 g 2,4,6-Trimethylbenzoylphenylphosphinsäureisopropylester.

Man erhält ein Copolymerisat (1) mit dem K-Wert 48.

55 Teile des Copolymerisats (1) werden gemischt mit 45 Teilen des Reaktivverdünners (2).

### Beispiel 5

Man stellt ein Copolymerisat (1) durch Polymerisation von 73 Gew.% n-Butylacrylat, 10 Gew.% 2-Ethylhexylacrylat, 10 Gew.% Methylacrylat, 5 Gew.% Acrylsäure, 2 Gew.% Diacetonacrylamid und 1 Gew.% Uvecryl P 36 (copolymerisierbarer Photoinitiator der Fa. UCB) unter Zugabe von 4 Gew.% 2,4,6-Trimethylbenzoylphenylphosphinsäureisopropylester und 1 Gew.% 2,2′-Azobisisobutyronitril mit einem K-Wert von 47 her.

55 Teile des Copolymerisats (1) werden gemischt mit 45 Teilen des Reaktivverdünners (2).

### Beispiel 6

Man verfährt wie in Beispiel 5, ersetzt jedoch Uvecryl P 36 durch die gleiche Menge (4-Methacryloyloxyphenyl)-2-hydroxy-2-propylketon.

55 Teile des Copolymerisats (1) werden gemischt mit 45 Teilen des Reaktivverdünners (2) sowie 2 Teilen Polytetrahydrofuran-650-di-acrylat als mehrfach olefinisch ungesättigte Verbindung (3).

### Beispiel 7

Man verfährt wie in Beispiel 5, verzichtet jedoch auf den Zusatz von Uvecryl P 36.

**Tabelle 1**

| Bestrahlungsbedingungen | | |
|---|---|---|
| Beispiel Nr. | Flächenauftrag [g/qm] | Bandgeschwindigkeit [m/min] |
| 1 | 25 g | 10 |
| 2 | 25 g | 10 |
| 3 | 25 g | 10 |
| 4 | 25 g | 10 |
| 5 | 25 g | 10 |
| 6 | 25 g | 10 |
| 7 | 25 g | 10 |

**Tabelle 2**

| Ergebnisse der anwendungstechnischen Prüfung als Haftkleber | | | | | |
|---|---|---|---|---|---|
| Beispiel Nr. | Scherfestigkeit [h] bei | | Schälfestigkeit [N/2 cm] | | Klebrigkeit* |
| | 23°C | 50°C | sofort | n. 24 h | |
| 1 | > 24 | 6 | 4,3 | 7,6 | gut |
| 2 | > 24 | > 24 | 3,5 | 7,2 | gut |
| 3 | > 24 | > 24 | 7,4 | 11,5 | gut |
| 4 | > 24 | > 24 | 6,5 | 9,0 | gut |
| 5 | > 24 | > 10 | 4,0 | 6,5 | befriedigend |
| 6 | > 24 | > 10 | 2,5 | 5,5 | befriedigend |
| 7 | > 24 | > 10 | 7,0 | 10,5 | gut |

| | | | | | |
|---|---|---|---|---|---|
| * Die Klebrigkeit wurde durch eine Gruppe beurteilt. | | | | | |

## Patentansprüche

1. Durch ultraviolette Strahlung härtbare Mittel, basierend auf einer Bindemittelzubereitung aus
(1) 99,0 bis 20 Gew.% eines Copolymerisats,
(2) 1,0 bis 80 Gew.% monoolefinisch ungesättigten Verbindungen und
(3) 0,0 bis 20 Gew.% mehrfach olefinisch ungesättigten Verbindungen,
dadurch gekennzeichnet, daß sie als Copolymerisate (1) solche enthalten, die erhältlich sind, indem man eine Mischung aus
(A) 80 bis 99,9 Gew.% olefinisch ungesättigten Monomeren, enthaltend 80 bis 99,9 Gew.%, bezogen auf das Copolymerisat, Hauptmonomere ausgewählt aus (Meth)acrylsäureestern von Alkanolen mit 1 bis 24 C-Atomen, Vinylestern 1 bis 20 C-Atome enthaltender, gesättigter Carbonsäuren, Vinylethern mit 3 bis 22 C-Atomen, Vinylaromaten mit 8 bis 12 C-Atomen, Monoolefinen mit 2 bis 20 C-Atomen, Diolefinen, Vinylhalogeniden und/oder Allylether bzw. Allylester,
(B) 0 bis 10 Gew.% eines copolymerisierbaren olefinisch ungesättigten Photoinitiators, sowie
(C) 0,1 bis 10 Gew.% eines die Polymerisation regelnden nicht copolymerisierbaren Photoinitiators
radikalisch polymerisiert, wobei die Summe aus (B) und (C) mindestens 0,1 Gew.% beträgt, die strahlensensitive Gruppe der Photoinitiatoren (C) Bestandteil der Polymerkette ist und die angegebenen Gewichtsprozente sich auf die Summe der Gewichte aus (A) + (B) + (C) beziehen.

2. Durch ultraviolette Strahlung härtbare Mittel gemäß Anspruch 1, dadurch gekennzeichnet, daß sie als Copolymerisate (1) solche enthalten, die erhältlich sind, indem man eine Mischung aus
(A) 90 bis 99,9 Gew.% olefinisch ungesättigten Monomeren, enthaltend 90 bis 99,5 Gew.%, bezogen auf das Copolymerisat, Hauptmonomere ausgewählt aus (Meth)acrylsäureestern von Alkanolen mit l bis 24 C-Atomen, Vinylestern 1 bis 20 C-Atome enthaltender, gesättigter Carbonsäuren, Vinylethern mit 3 bis 22 C-Atomen, Vinylaromaten mit 8 bis 12 C-Atomen, Monoolefinen mit 2 bis 20 C-Atomen, Diolefinen, Vinylhalogeniden und/oder Allylether bzw. Allylester,
(B) 0 Gew.% eines copolymerisierbaren olefinisch ungesättigten Photoinitiators, sowie
(C) 0,1 bis 10 Gew.% eines die Polymerisation regelnden nicht copolymerisierbaren Photoinitiators
radikalisch polymerisiert.

3. Verwendung der Mittel gemäß den vorstehenden Ansprüchen 1 oder 2 als durch UV-Strahlung vernetzbare Dicht-, Siegel-, Kaschier-, Beschichtungs-, Imprägnierungs-, Überzugs- und Klebemittel.

4. Verwendung der Mittel gemäß den vorstehenden Ansprüchen 1 oder 2 als Haftklebemittel zur Herstellung haftklebrig ausgerüsteter Klebebänder, Etiketten, Haftklebefolien und Prägezangenfolien.

## Claims

1. An agent which is curable by ultraviolet radiation and is based on a binder formulation of
(1) from 99.0 to 20% by weight of a copolymer,
(2) from 1.0 to 80% by weight of monoolefinically unsaturated compounds and
(3) from 0.0 to 20% by weight of polyolefinically unsaturated compounds,
wherein the said agent contains a copolymer (1) which is obtainable by subjecting a mixture of
(A) from 80 to 99.9% by weight of olefinically unsaturated monomers, containing from 80 to 99.9% by weight, based on the copolymer, of main monomers selected from the group consisting of (meth)acrylates of alkanols of 1 to 24 carbon atoms, vinyl esters of saturated carboxylic acids of 1 to 20 carbon atoms, vinyl ethers of 3 to 22 carbon atoms, vinylaromatics of 8 to 12 carbon atoms, monoolefins of 2 to 20 carbon atoms, diolefins, vinyl halides and/or allyl ethers and/or allyl esters,
(B) from 0 to 10% by weight of a copolymerizable olefinically unsaturated photoinitiator and
(C) from 0.1 to 10% by weight of a polymerization-regulating noncopolymerizable photoinitiator
to free radical polymerization, the sum of (B) and (C) being not less than 0.1% by weight, the radiation-sensitive group of photoinitiators (C) being part of the polymer chain, and the stated percentages by weight being based on the sum of the weights of (A) + (B) + (C).

2. An agent which is curable by ultraviolet radiation, as claimed in claim 1, which contains a copolymer (1) obtainable by subjecting a mixture of
(A) from 90 to 99.9% by weight of olefinically unsaturated monomers, containing from 90 to 99.9% by weight, based on the copolymer, of main monomers selected from the group consisting of (meth)acrylates of alkanols of 1 to 24 carbon atoms, vinyl esters of saturated carboxylic acids of 1 to 20 carbon atoms, vinyl ethers of 3 to 22 carbon atoms, vinylaromatics of 8 to 12 carbon atoms, monoolefins of 2 to 20 carbon atoms, diolefins, vinyl halides and/or allyl ethers and/or allyl esters,
(B) 0 by weight of a copolymerizable olefinically unsaturated photoinitiator and
(C) from 0.1 to 10% by weight of a polymerization-regulating noncopolymerizable photoinitiator
to free radical polymerization.

3. Use of an agent as claimed in either of the above claims 1 and 2 as a filling compound, sealant, laminating agent, coating agent, impregnating agent or adhesive which can be crosslinked by UV radiation.

4. Use of an agent as claimed in either of the above claims 1 and 2 as a contact adhesive for producing adhesive tapes, labels, pressure-sensitive adhesive films and blocking foils provided with a contact adhesive.

## Revendications

1. Compositions durcissables par un rayonnement ultraviolet, à base d'une préparation de liant constituée de
(1) 99,0 à 20% en poids d'un copolymère,
(2) 1,0 à 80% en poids de composés monooléfiniquement insaturés et
(3) 0,0 à 20% en poids de composés à multiples insaturations oléfiniques,
caractérisées en ce qu'elles contiennent, à titre de copolymères (1), ceux que l'on peut préparer en polymérisant par voie radicalaire, un mélange formé de
(A) 80 à 99,9% en poids de monomères oléfiniquement insaturés, contenant de 80 à 99,9% en poids, par rapport au copolymère, de monomères principaux choisis parmi des esters de l'acide (méth)acrylique d'alcanols comportant de 1 à 24 atomes de carbone, des esters vinyliques d'acides carboxyliques saturés, comportant de 1 à 20 atomes de carbone, des éthers vinyliques possédant de 3 à 22 atomes de carbone, des composés vinylaromatiques comportant de 8 à 12 atomes de carbone, des monooléfines possédant de 2 à 20 atomes de carbone, des dioléfines, des halogénures de vinyle et/ou des éthers allyliques ou des esters allyliques,
(B) 0 à 10% en poids d'un photoamorceur oléfiniquement insaturé copolymérisable, comme aussi
(C) 0,1 à 10% en poids d'un photoamorceur non copolymérisable, régulant la polymérisation,
où la somme de (B) et de (C) atteint au moins 0,1% en poids, le radical sensible au rayonnement des photoamorceurs (C) fait partie constituante de la chaîne polymérique et les pourcentages pondéraux indiqués se rapportent à la somme des poids de (A) + (B) + (C).

2. Compositions durcissables par un rayonnement ultraviolet suivant la revendication 1, caractérisées en ce qu'elles contiennent, à titre de copolymères (1), ceux que l'on peut obtenir en polymérisant par voie radicalaire un mélange formé de
(A) 90 à 99,9% en poids de monomères oléfiniquement insaturés, contenant de 90 à 99,5% en poids, par rapport au copolymère, de monomères principaux choisis parmi des esters de l'acide (méth)acrylique d'alcanols qui comportent de 1 à 24 atomes de carbone, des esters vinyliques d'acides carboxyliques saturés qui contiennent de 1 à 20 atomes de carbone, des éthers vinyliques qui possèdent de 3 à 22 atomes de carbone, des composés vinylaromatiques qui comportent de 8 à 12 atomes de carbone, des monooléfines qui possèdent de 2 à 20 atomes de carbone, des dioléfines, des halogénures de vinyle et/ou des éthers allyliques ou des esters allyliques,
(B) 0% en poids d'un photoamorceur oléfiniquement insaturé, copolymérisable, comme aussi
(C) 0,1 à 10% en poids d'un photoamorceur non copolymérisable, régulant la polymérisation.

3. Utilisation des compositions suivant la revendication 1 ou 2 à titre de compositions d'étanchéité, de scellage, de stratification, de recouvrement, d'imprégnation, de revêtement et de collage.

4. Utilisation des compositions suivant la revendication 1 ou 2, à titre de colle de contact pour la fabrication de feuilles à marquer à la pince, de feuilles autocollantes, d'étiquettes et de bandes collantes pourvues d'une colle de contact.
